# EUROPEAN PATENT SPECIFICATION

(11) **EP 3 954 193 B1**
(45) Date of publication and mention of the grant of the patent: **01.01.2025**
(21) Application number: 19923831.2
(22) Date of filing: 23.09.2019
(51) Int. Cl.: A01D 41/127, B60T 7/16, B60T 7/18, B60T 7/22, B60W 10/10, B60W 10/18, B60W 30/18, F16H 61/12, F16H 61/16, G05D 1/00, G08C 17/02

(54) **INTELLIGENT HARVESTER WITH AUTOMATIC BRAKING FUNCTION, AND BRAKING METHOD THEREOF**
INTELLIGENTE ERNTEMASCHINE MIT AUTOMATISCHER BREMSFUNKTION UND BREMSVERFAHREN DAFÜR
MOISSONNEUSE INTELLIGENTE DOTÉE D'UNE FONCTION DE FREINAGE AUTOMATIQUE, ET PROCÉDÉ DE FREINAGE ASSOCIÉ

(30) Priority: 09.04.2019 CN 201910280709; 09.04.2019 CN 201920475208 U
(43) Date of publication of application: 16.02.2022
(73) Proprietor: FJ Dynamics Technology Co., Ltd, Xiangyang, Hubei 441100 (CN)
(72) Inventor: WU, Di, Xiangyang, Hubei 441100 (CN); YAO, Yuan, Xiangyang, Hubei 441100 (CN); WANG, Bo, Xiangyang, Hubei 441100 (CN); ZHANG, Xiao, Xiangyang, Hubei 441100 (CN); WANG, Qingquan, Xiangyang, Hubei 441100 (CN); CHEN, Rui, Xiangyang, Hubei 441100 (CN); TONG, Chao, Xiangyang, Hubei 441100 (CN)
(74) Representative: Zaboliene, Reda
(86) International application number: PCT/CN2019/107286
(87) International publication number: WO 2020/206949

(56) References cited:
- EP-A1- 3 165 062
- CN-A- 103 729 953
- CN-A- 105 927 397
- CN-A- 106 164 800
- CN-A- 106 791 617
- CN-A- 106 791 617
- CN-A- 110 217 215
- CN-U- 204 066 330
- CN-U- 206 506 879
- US-A1- 2013 304 310
- US-A1- 2017 135 277

## Description

### FIELD

The subject matter relates to field of harvester, and more particularly, to an intelligent harvester with automatic braking function and a braking method thereof.

### BACKGROUND

With the development of science and technology, the field of agricultural machinery has developed rapidly, especially the harvester. More and more harvesters are being developed in the intelligence and autonomous direction, which frees people from heavy agricultural labor. At the same time, the efficiency of agricultural production is effectively improved.

Traditional harvesters usually require a driver to drive when performing agricultural operations, and the harvester driver controls the movement and operation of the harvester. During the operation of traditional harvesters, when an emergency occurs, the driver of the harvester can control the harvester to stop moving to prevent injury to the human body or property damage. In other words, the safety performance of the traditional harvester can be relatively adequately guaranteed.

Since the unmanned harvester does not involve the driver during the operation of the harvester, when the harvester encounters an emergency situation, for example, when the signal between the unmanned harvester and the remote control system is interrupted, the unmanned harvester will be out of control. At this time, if emergency braking measures cannot step in to take control of the unmanned harvester to stop it from moving, the unmanned harvester could become a great threat to human and property safety to those near it. Documents CN 106 791 617 A, EP 3 165 062 A1, and US 2017/135277 A1 disclose known agricultural machines with breaking functions.

With the progress of society and the development of technology, the unmanned harvester has become an inevitable development trend. However, how to solve the huge safety hazard that exists in the signal interruption between the unmanned harvester and the remote control system during the operation of the unmanned harvester has become an urgent technical problem to be solved in the development of the unmanned harvester.

### SUMMARY

The present disclosure provides an intelligent harvester with automatic braking function according to the subject-matter of claim 1, and and a braking method according to the subject-matter of claim 12.

The present disclosure provides an intelligent harvester with automatic braking function and a braking method thereof, the intelligent harvester with automatic braking function can automatically brake when a communication between the intelligent harvester with automatic braking function and the remote control system fails, thereby preventing a loss of personnel and property.

The present disclosure provides an intelligent harvester with automatic braking function and a braking method thereof, the intelligent harvester with automatic braking function can detect a communication with the remote control system in real time, and brakes urgently when the communication failure is detected.

The present disclosure provides an intelligent harvester with automatic braking function and a braking method thereof, the intelligent harvester with automatic braking function can control a transmission assembly to switch to a neutral position when detecting a communication failure with the remote control system, so that the intelligent harvester with automatic braking function can brake urgently.

The present disclosure provides an intelligent harvester with automatic braking function and a braking method thereof, the intelligent harvester with automatic braking function can control a braking assembly to brake when detecting a communication failure with the remote control system, so that the intelligent harvester with automatic braking function can brake urgently.

The present disclosure provides an intelligent harvester with automatic braking function and a braking method thereof, the intelligent harvester with automatic braking function further includes a wireless communication assembly, a controller and a first driving assembly operatively connected to the controller. The first driving assembly is connected to the transmission assembly. The controller controls the first driving assembly drives the transmission assembly to switch the neutral position when a communication failure between the wireless communication assembly and the remote control system is detected.

The present disclosure provides an intelligent harvester with automatic braking function and a braking method thereof, the intelligent harvester with automatic braking function further includes a second driving assembly operatively connected to the controller, the second driving assembly is operatively connected to the braking assembly, the controller controls the second driving assembly drives the braking assembly to brake when a communication failure between the wireless communication assembly and the remote control system is detected.

The present disclosure provides an intelligent harvester with automatic braking function and a braking method thereof, the intelligent harvester with automatic braking function further includes a communication detection system. The intelligent harvester is controlled to brake when the communication detection system detects a signal strength between the wireless communication assembly and the remote control system fails is less than a preset signal value.

The present disclosure provides an intelligent harvester with automatic braking function and a braking method thereof, the intelligent harvester is controlled to brake when the communication detection system detects that the communication between the wireless communication component and the remote control system is interrupted.

The present disclosure provides an intelligent harvester with automatic braking function and a braking method thereof, the intelligent harvester with automatic braking function further includes a delay detection control assembly operatively. The delay detection control assembly operatively is used to control the communication detection system to re-detect the communication between the wireless communication assembly and the remote control system after the harvester body is controlled to brake.

The present disclosure provides an intelligent harvester with automatic braking function and a braking method thereof, the intelligent harvester with automatic braking function has a simple structure and high safety.

Correspondingly, in order to achieve at least one the above objectives of the present disclosure, the present invention provides an intelligent harvester with automatic braking function, which includes:
A harvester body.
A wireless communication assembly arranged in the harvester body and operatively connected to the remote control system;
A communication detection system detecting a communication between the wireless communication assembly and the remote control system; and
A braking system arranged in the harvester body and operatively connected to the communication detection system. The braking system controls the harvester body to brake when the communication detection system detects the communication between the wireless communication assembly and the remote control system fails.

According to an embodiment of the present disclosure, the intelligent harvester with automatic braking function further comprises a transmission assembly arranged in the harvester body and operatively connected to the braking system, the braking system controls the transmission assembly to switch a neutral position when the communication detection system detects the communication between the wireless communication assembly and the remote control system fails.

According to an embodiment of the present disclosure, the intelligent harvester with automatic braking function further comprises a braking assembly operatively connected to the braking system, the braking system controls the braking assembly to brake when the communication detection system detects the communication between the wireless communication assembly and the remote control system fails.

According to an embodiment of the present disclosure, the braking assembly comprises a controller and a first driving assembly operatively connected to the controller, the controller is operatively connected to the communication detection system, the first driving assembly is connected to the transmission assembly, the controller controls an operation of the first driving assembly and the first driving assembly drives the transmission assembly to switch the neutral position when the communication detection system detects the communication between the wireless communication assembly and the remote control system fails.

According to an embodiment of the present disclosure, the first driving assembly comprises a motor main body and a driving shaft extending outward from the motor main body, the transmission assembly comprises a transmission main body and a control rod extending outward from the transmission main body, the driving shaft is connected to the control rod and drive the control rod to make a movement relative to the transmission main body.

According to an embodiment of the present disclosure, the intelligent harvester with automatic braking function further comprises a braking assembly operatively connected to the braking system, the braking system controls the braking assembly to brake when the communication detection system detects the communication between the wireless communication assembly and the remote control system fails.

According to an embodiment of the present disclosure, the braking assembly comprises a controller and a second driving assembly operatively connected to the controller, the controller is operatively connected to the communication detection system, the second driving assembly is connected to the braking assembly, the controller controls an operation of the second driving assembly and the second driving assembly drives the braking assembly to brake when the communication detection system detects the communication between the wireless communication assembly and the remote control system fails.

According to an embodiment of the present disclosure, the intelligent harvester with automatic braking function further comprises a positioning assembly to obtain a position of the harvester body.

According to the subject-matter of claim 1, the communication detection system comprises a communication strength detection unit and a signal comparison unit operatively connected to the communication strength detection unit, the communication strength detection unit detects a signal strength between the wireless communication assembly and the remote control system, the signal comparison unit compare the signal strength detected by the communication strength detection unit and a preset signal value, the signal comparison unit compare is operatively connected to the braking system.

According to an embodiment of the present disclosure, the communication detection system comprises a communication interruption detection assembly, the communication interruption detection assembly detects the communication between the wireless communication assembly and the remote control system.

According to an embodiment of the present disclosure, the intelligent harvester with automatic braking function further comprises a delay detection control assembly operatively connected to the communication detection system, the delay detection control assembly controls the communication detection system to re-detect the communication between the wireless communication assembly and the remote control system after an interval of a preset time after the braking system controls the harvester body to brake.

According to one aspect of the present disclosure, the present disclosure provides a braking method for an intelligent harvester with automatic braking function, the braking method includes the following steps:
(a) detecting a communication between a wireless communication assembly arranged in a harvester body and a remote control system; and
(b) controlling the harvester body to brake when the communication between the wireless communication assembly and the remote control system is failure.

According to an embodiment of the present disclosure, the step (b) includes controlling a transmission assembly arranged in the harvester body to switch to a neutral position when the communication between the wireless communication assembly and the remote control system is failure.

According to an embodiment of the present disclosure, the step (b) includes controlling a braking assembly arranged in the harvester body to brake when the communication between the wireless communication assembly and the remote control system is failure.

According to the subject-matter of independent claim 12, the step (a) includes detecting a signal strength of the communication between the wireless communication assembly and the remote control system; the step (b) includes comparing the signal strength and a preset signal value; and controlling the harvester body to brake when the signal strength is less than the preset signal value.

According to an embodiment of the present disclosure, the step (b) includes controlling the harvester body to brake when the communication between the wireless communication assembly and the remote control system is interrupted.

According to an embodiment of the present disclosure, after controlling the harvester body to brake, the braking method further includes re-detecting a signal strength of the communication between the wireless communication assembly and the remote control system; comparing the signal strength and a preset signal value; and controlling the harvester body to restart when the signal strength is greater than the preset signal value.

### BRIEF DESCRIPTION OF THE DRAWINGS

FIG. 1 is a block diagram of an intelligent harvester with automatic braking function according to an embodiment of the present disclosure.
FIG. 2 is a diagrammatic view of an intelligent harvester with automatic braking function according to an embodiment of the present disclosure.
FIG. 3 is another block diagram of an intelligent harvester with automatic braking function according to an embodiment of the present disclosure.
FIG. 4 is a diagrammatic view of a first driving motor of an intelligent harvester with automatic braking function according to an embodiment of the present disclosure.
FIG. 5 is a diagrammatic view of a second driving motor of an intelligent harvester with automatic braking function according to an embodiment of the present disclosure.
FIG. 6 is a cross-sectional view of a second driving motor of an intelligent harvester with automatic braking function according to an embodiment of the present disclosure.
FIG. 7 is a block diagram of a braking process of an intelligent harvester with automatic braking function according to an embodiment of the present disclosure.
FIG. 8 is another block diagram of a braking process of an intelligent harvester with automatic braking function according to an embodiment of the present disclosure.
FIG. 9 is a flowchart of a braking method for the intelligent harvester with automatic braking function.

### DETAILED DESCRIPTION

The following description is used to disclose the present disclosure so that those skilled in the art can implement the present disclosure. The preferred embodiments in the following description are only examples.

Those skilled in the art should understand that, in the disclosure of the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and simplify the description, rather than indicating or implying a device or an clement must have a specific orientation, and is constructed and operated in a specific orientation, so the above terms should not be understood as a limitation of the present disclosure.

It can be understood that the term "a" should be understood as "at least one" or "one or more", that is, in one embodiment, the number of a kind of element may be one, and in another embodiment, the number of the kind of element can be more than one, and the term "one" cannot be understood as a restriction on the number.

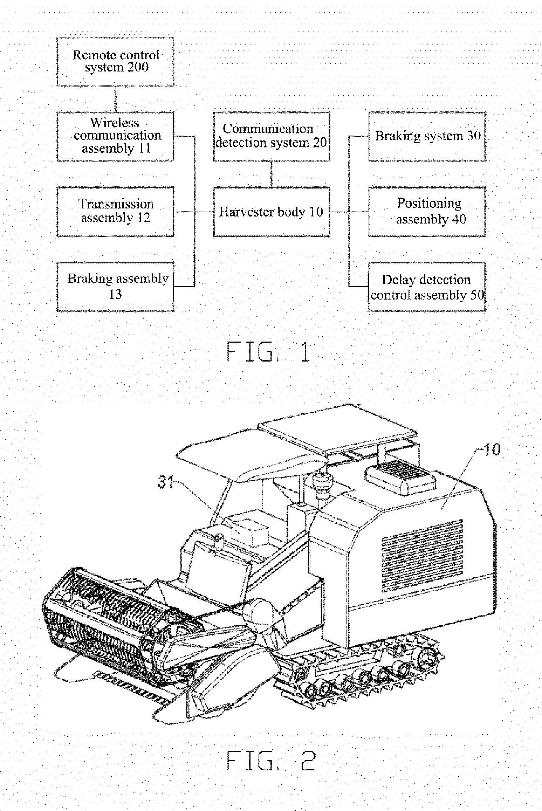

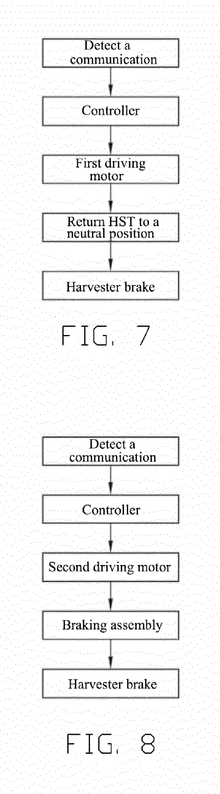

Referring to FIGS. 1 to 8, an intelligent harvester with automatic braking function is provided according to an embodiment of the present disclosure. The intelligent harvester with automatic braking function can automatically take emergency braking measures when the communication with the remote wireless communication system fails, thereby effectively avoiding threats to people's life and property safety caused by the loss of control of the intelligent harvester, thereby effectively improving a safety performance of the intelligent harvester.

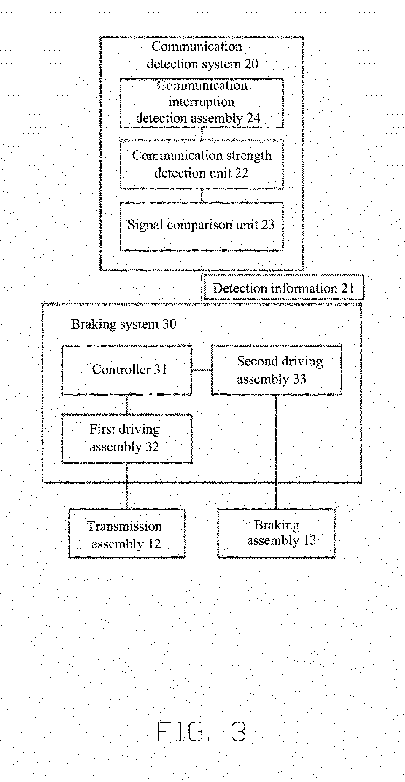

Referring to FIGS. 1 and 3, the intelligent harvester with automatic braking function includes a harvester body 10, a communication detection system 20, and a braking system 30. The braking system 30 is arranged in the harvester body 10. The braking system 30 is operatively connected to the communication detection system 20.

The intelligent harvester with automatic braking function further includes a wireless communication assembly 11 arranged in the harvester body 10. The wireless communication assembly 11 is operatively connected to a remote control system 200. A user of the intelligent harvester with automatic braking function can send control instructions to the wireless communication assembly 11 through the remote control system 200 to control an operation of the harvester body 10.

The intelligent harvester with automatic braking function may further include an executive assembly. The executive assembly is operatively connected to the wireless communication assembly 11. The executive assembly obtains corresponding control instructions from the wireless communication assembly 11 to control the operation of the harvester body 10. In other words, the control instructions sent by the user to the wireless communication assembly 11 through the remote control system 200 can be acquired by the executive assembly. The executive assembly can control the operation of the harvester body 10 based on the control instructions.

The communication detection system 20 is used to detected a communication between the wireless communication assembly 11 arranged in the harvester body 10 and the remote control system 200. When the communication detection system 20 detects the communication between the wireless communication assembly 11 arranged in the harvester body 10 and the remote control system 200 fails, the braking system 30 takes emergency braking measures to control the braking of the harvester body 10, thereby preventing the harvester body 10 from continuing to move without the control of the remote control system 200. and protecting people's lives and property safety.

The wireless communication assembly 11 is arranged in the harvester body 10 and moves along with the movement of the harvester body 10. The wireless communication assembly 11 is operatively connected to the remote control system 200. The remote control system 200 can send control instructions to the wireless communication assembly 11 through wireless communication for controlling the operation of the harvester body 10. The communication detection system 20 is operatively connected to the wireless communication assembly 11. The communication detection system 20 is used to detect the communication between the wireless communication assembly 11 and the remote control system 200. The communication detection system 20 is further operatively connected to the braking system 30. When the communication detection system 20 detects that the communication between the wireless communication assembly 11 and the remote control system 200 fails, the braking system 30 takes emergency braking measures to control the harvester body 10 to stop moving in time after losing the control of the remote control system 200.

In at least one embodiment, the intelligent harvester with automatic braking function may further include a transmission assembly 12 arranged in the harvester body 10. The operating state of the harvester body 10 can be controlled by controlling the transmission assembly 12 to switch between different states. For example, when the transmission assembly 12 is switched to a walking gear, the harvester body 10 can be driven to move forward, when the transmission assembly 12 is switched to a reverse gear, the harvester body 10 can be driven to move backward, and when the transmission assembly 12 is switched to a neutral position, the harvester body 10 can stop moving.

Preferably, the transmission assembly 12 may be a hydro static transmission (shorted as HST).

The transmission assembly 12 is operatively connected to the braking system 30. When the communication detection system 20 detects that the communication between the wireless communication assembly 11 and the remote control system 200 fails, the braking system 30 can control the operation of the transmission assembly 12 and adjust a working state of the transmission assembly 12 to stop the movement of the harvester body 10. Specifically, when the communication detection system 20 detects that the communication between the wireless communication assembly 11 and the remote control system 200 fails, the braking system 30 drives the HST to switch to the neutral position to stop the movement of the harvester body 10.

Referring to FIG. 3. specifically, when the communication detection system 20 detects that the communication between the wireless communication assembly 11 and the remote control system 200 fails, the communication detection system 20 generates a detection information 21. The braking system 30 can obtain the detection information 21 from the communication detection system 20, and control the working state of the transmission assembly 12 based on the detection information 21.

Referring to FIG. 3. the braking system 30 may further include a controller 31 and a first driving assembly 32. The first driving assembly 32 is operatively connected to the controller 31. The controller 31 is operatively connected to the communication detection system 20. The first driving assembly 32 is connected to the transmission assembly 12, and can drive the transmission assembly 12 to switch between different working gears. When the communication detection system 20 detects that the communication between the wireless communication assembly 11 and the remote control system 200 fails, the controller 31 can obtain detection information 21 from the communication detection system 20, and control the first driving assembly 32 to drive the transmission assembly 12 to switch to the neutral position based on the detection information 21, thereby stopping the movement of the harvester body 10. So that the harvester body 10 is prevented from continuing to move in an out of control state to avoid losses to people's lives and property.

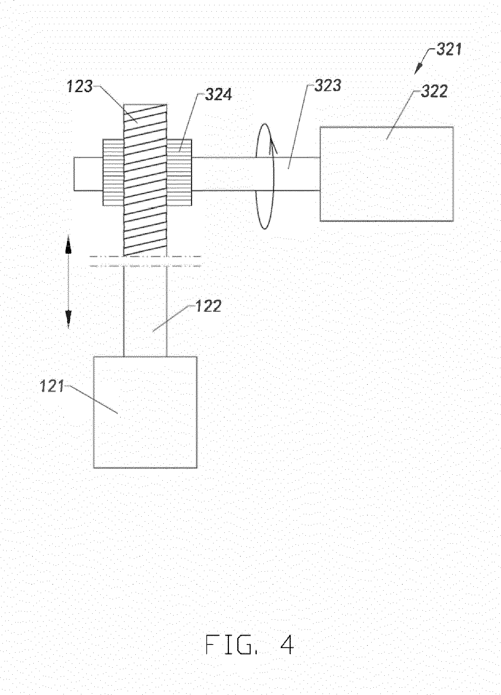

Preferably, referring to FIG. 4, the first driving assembly 32 may be a driving motor 321. The driving motor 321 is connected to the HST. The driving motor 321 can drive the HST to switch between different gear states. When the communication detection system 20 detects that the communication between the wireless communication assembly 11 and the remote control system 200 fails, the driving motor 321 drives the HST to switch to the neutral position to stop the movement of the harvester body 10.

The driving motor 321 may include a motor main body 322 and a driving shaft 323 extending outward from the motor main body 322. The motor main body 322 can drive the driving shaft 323 to rotate. The transmission assembly 12 may include a transmission main body 121 and a control rod 122 extending outward from the transmission main body 121. The control rod 122 can be driven to make a piston movement relative to the transmission main body 121. When the control rod 122 is driven to make the piston movement relative to the transmission main body 121, a transmission ratio of the transmission main body 121 can be changed, thereby changing the gear of the harvester body 10.

The driving shaft 323 of the first driving assembly 32 is connected to the control rod 122 of the transmission assembly 12. When the driving shaft 323 of the first driving assembly 32 rotates, the control rod 122 of the transmission assembly 12 is driven by the driving shaft 323 to make a piston movement relative to the transmission main body 121, thereby controlling the transmission assembly 12 to switch between different gear states.

Preferably, the driving shaft 323 of the driving motor 321 is perpendicular to the control rod 122 of the transmission assembly 12, and is engaged with the control rod 122 of the transmission assembly 12. When the driving shaft 323 rotates, the control rod 122 is driven to make a piston movement relative to the transmission main body 121.

The driving motor 321 may further include a first gear assembly 324 arranged on the driving shaft 323. The transmission assembly 12 may further include a second gear assembly 123 arranged on the control rod 122. The first gear assembly 324 is adapted to the second gear assembly 123. The first gear assembly 324 is meshed with the second gear assembly 123, so that the driving shaft 323 can drive the control rod 122 to make a piston movement relative to the transmission main body 121. Preferably, the first gear assembly 324 is arranged on an end of the driving shaft 323 away from the motor main body 322.

By controlling a rotation direction and a rotation angle of the driving motor 321, the transmission assembly 12 can be controlled to switch between different gear states. For example, when the motor main body 322 of the driving motor 321 drives the driving shaft 323 to rotate counterclockwise, the driving shaft 323 drives the control rod 122 of the transmission assembly 12 to move in a direction away from the transmission main body 121, and when the motor main body 322 drives the driving shaft 323 to rotate clockwise, the driving shaft 323 drives the control rod 122 of the transmission assembly 12 to move in a direction close to the transmission main body 121, thereby changing the transmission ratio of the transmission main body 121 and controlling the transmission assembly 12 to switch between different gear states. In at least one embodiment, there can be other correspondences between the rotation direction of the driving shaft 323 and a movement direction of the control rod. That is to say, when the driving shaft 323 rotates counterclockwise, the driving shaft 323 may drive the control rod 122 to move in a direction close to the transmission main body 121, and when the driving shaft 323 rotates clockwise, the driving shaft 323 may drive the control rod 122 to move in a direction away from the transmission main body 121. Those skilled in the art should understand that, as long as the objective of the present invention can be achieved, the corresponding relationship between the rotation direction of the driving shaft 323 and the movement direction of the control rod 122 should not constitute a limitation to the present invention.

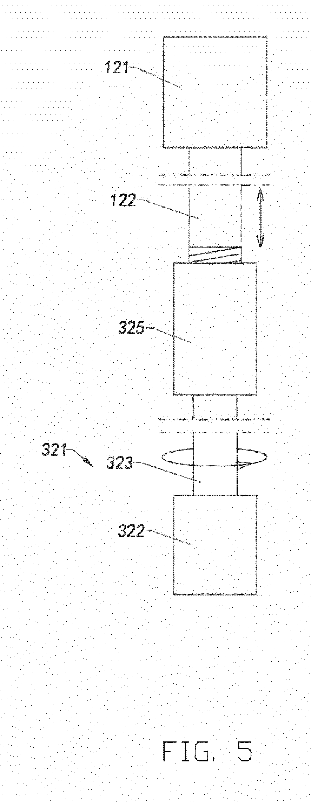

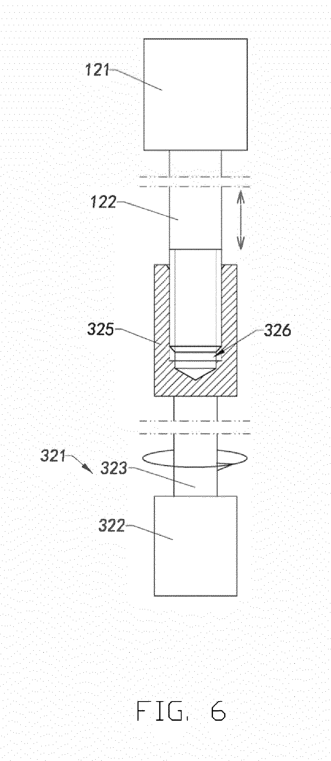

Referring to FIGS. 5 and 6, in at least one embodiment, the intelligent harvester with automatic braking function may further include a screw assembly 325 arranged between the driving shaft 323 of the driving motor 321 and the control rod 122 of the transmission assembly 12. One end of the screw assembly 325 is connected to the driving shaft 323, and the other end of the screw assembly 325 is connected to the control rod 122.

Preferably, the screw assembly 325 may be arranged between the driving shaft 323 and the control rod 122, and may be coaxial with the driving shaft 323 and the control rod 122, respectively.

The screw assembly 325 may further include a movable groove 326 opening in the direction facing the control rod 122, and the end of the control rod 122 away from the transmission main body 121 is movably disposed in the movable groove 326. Internal threads are arranged on an inner wall defining the movable groove 326, and external threads are arranged on the end of the control rod 122 away from the transmission main body 121. The internal threads and the external threads are compatible with each other. The end of the control rod 122 away from the transmission main body 121 can rotate in the movable groove 326.

The end of the screw assembly 325 away from the control rod 122 is fixed to the end of the driving shaft 323 of the driving motor 321 away from the motor main body 322. In at least one embodiment, the end of the screw assembly 325 away from the control rod 122 may be integrally formed to the end of the driving shaft 323 away from the motor main body 322.

The motor main body 322 of the driving motor 321 and the transmission main body 121 of the transmission assembly 12 are respectively fixed to the harvester body 10. When the motor main body 322 of the drive motor 321 drives the drive shaft 323 to rotate, the screw assembly 325 rotates with the drive shaft 323 and at the same drives the control rod 122 of the transmission assembly 12 to make the piston movement relative to the transmission main body 121, thereby changing the transmission ratio of the transmission main body 121. For example, but not limited to, when the motor main body 322 of the driving motor 321 drives the driving shaft 323 to rotate clockwise, the screw assembly 325 drives the control rod 122 to move in the direction away from the transmission main body 121. In other words, the control rod 122 moves toward the bottom of the movable groove 326. When the motor main body 322 of the driving motor 321 drives the driving shaft 323 to rotate counterclockwise, the screw assembly 325 drives the control rod 122 to move in the direction close to the transmission main body 121. In other words, the control rod 122 moves in a direction away from the bottom of the movable groove 326. That is to say, the transmission assembly 12 can be controlled to switch between different gear states by controlling the rotation direction and the rotation angle of the driving motor 321. When the communication detection system 20 detects that the communication between the wireless communication assembly 11 and the remote control system 200 fails, the controller 31 controls the operation of the driving motor 321, and the driving motor 321 drives the control rod of the transmission assembly 12 to switch to the neutral position, so that the transmission assembly 12 is switched to the neutral state.

Referring to FIG. 3, in at least one embodiment, the intelligent harvester with automatic braking function may further include a braking assembly 13. The braking assembly 13 is operatively connected to the braking system 30. When the communication detection system 20 detects that the communication between the wireless communication assembly 11 and the remote control system 200 fails, the braking system 30 controls the braking assembly 13 to brake, so that the harvester body 10 can stop moving.

Specifically, the braking system 30 may further include a second driving assembly 33. The second driving assembly 33 is operatively connected to the controller 31 and the braking assembly 13, respectively. When the communication detection system 20 detects that the communication between the wireless communication assembly 11 and the remote control system 200 fails, the controller 31 controls the second driving assembly 33 to drive the braking assembly 13 to brake, so that the harvester body 10 stops moving, and the harvester body 10 is prevented from continuing to move without the control of the remote control system 200.

In at least one embodiment, when the communication detection system 20 detects that the communication between the wireless communication assembly 11 and the remote control system 200 fails, the braking system 30 controls the transmission assembly 12 to switch to the neutral state, at the same time, the braking system 30 can also control the braking assembly 13 to brake, so that the harvester body 10 can be quickly stopped. That is, when the communication detection system 20 detects that the communication between the wireless communication assembly 11 and the remote control system 200 fails, the controller 31 controls the first driving assembly 32 to drive the transmission assembly 12 to switch to the neutral state, and at the same time, the controller 31 controls the second driving assembly 33 to drive the braking assembly 13 to brake, so that the harvester body 10 can be braked quickly.

The communication detection system 20 includes a communication strength detection unit 22, and the communication strength detection unit 22 is operatively connected to the wireless communication assembly 11 and/or the remote control system 200. The communication strength detection unit 22 is used to detect a signal strength between the wireless communication assembly 11 and the remote control system 200.

The communication strength detection unit 22 is operatively connected to the braking system 30. When the signal strength between the wireless communication assembly 11 and the remote control system 200 detected the communication strength detection unit 22 is less than a preset signal value, the braking system 30 controls the harvester body 10 to brake.

The communication detection system 20 further includes a signal comparison unit 23. The signal comparison unit 23 is operatively connected to the communication strength detection unit 22. The signal comparison unit 23 is used to obtain a real-time signal strength between the wireless communication assembly 11 and the remote control system 200 detected by the communication strength detection unit 22 from the communication strength detection unit 22, and compare the real-time signal strength and the preset signal value. When the real-time signal strength is less than the preset value, the braking system 30 controls the harvester body 10 to brake. When the value of the real-time signal strength is greater than the preset signal value, the braking system 30 does not control the braking of the harvester body 10, the signal comparison unit 23 continues to obtain the real-time signal strength from the communication strength detection unit 22, and compares the real-time signal strength with the preset signal value.

When the signal strength between the wireless communication assembly 11 arranged in the harvester body 10 and the remote control system 200 is less than a certain value, the communication between the wireless communication assembly 11 and the remote control system 200 will be greatly affected. For example, when the remote control system 200 sends a control instruction to the wireless communication assembly 11, since the signal strength between the wireless communication assembly 11 and the remote control system 200 is weak, the control instruction received by the wireless communication assembly 11 may differ from the actual control instruction sent by the remote control system 200. Therefore, the harvester body 10 may execute wrong instructions and affect the safety of people's lives and property.

The signal comparison unit 23 is operatively connected to the controller 31 of the braking system 30. When the real-time signal strength is less than the preset signal value, the controller 31 controls the first driving assembly 32 to drive the transmission assembly 12 to switch to the neutral position, controls the second driving assembly 33 to drive the braking assembly 13 to brake. or controls the first driving assembly 32 to drive the transmission assembly 12 to switch to the neutral position and at the same time to drive the braking assembly 13 to brake. So that the harvester body 10 can brake urgently to prevent the harvester body 10 from continuing to move when the signal strength between the wireless communication assembly 11 and the remote control system 200 is weak.

In at least one embodiment, when the communication detection system 20 detects that the communication between the wireless communication assembly 11 and the remote control system 200 is interrupted, the braking system 30 controls the harvester body 10 to brake. The communication detection system 20 includes a communication interruption detection assembly 24, the communication interruption detection assembly 24 is operatively connected to the braking system 30 and the wireless communication assembly 11 respectively. The communication interruption detection assembly 24 is used to detect the communication between the wireless communication assembly 11 and the remote control system 200. When the communication interruption detection assembly 24 detects that the communication between the wireless communication assembly 11 and the remote control system 200 is interrupted, the braking system 30 controls the harvester body 10 to brake.

Specifically, when the communication interruption detection assembly 24 detects that the communication between the wireless communication assembly 11 and the remote control system 200 is interrupted, the controller 31 controls the first driving component 32 to drive the transmission component 12 to switch to the neutral position, controls the second driving assembly 33 to drive the braking assembly to brake, or controls the first driving assembly 32 to drive the transmission assembly 12 to switch to the neutral position and at the same time to drive the braking assembly 13 to brake. So that the harvester body 10 can brake quickly.

Referring to FIG. 1, the intelligent harvester with automatic braking function may further include a positioning assembly 40. The positioning assembly 40 is operatively connected to the wireless communication assembly 11. The positioning assembly 40 is used to obtain a real-time position of the harvester body 10, and send a position information of the harvester body 10 to the remote control system 200 through the wireless communication assembly 11, so that the user can obtain the position information of the harvester body 10 in real time.

In at least one embodiment, the positioning assembly may be a global position system (GPS).

When the communication between the wireless communication assembly 11 and the remote control system 200 fails, and the braking system 30 controls the harvester body 10 to brake in an emergency, the remote control system 200 can no longer obtain the position information of the harvester body 10 through the wireless communication assembly 11. When the communication between the wireless communication assembly 11 and the remote control system 200 fails, the braking system 30 controls the harvester body 10 to brake, then the position information of the harvester body 10 last obtained by the remote control system 200 from the wireless communication assembly 11 is a position information where the wireless communication assembly 11 and the remote control system 200 have a communication failure. That is, people only need to determine the last position information of the harvester body 10 obtained by the remote control system 200 to determine the position information of the harvester body 10 when a communication failure occurs between the wireless communication assembly 11 and the remote control system 200. So that the position information of the harvester body 10 can be quickly obtained, and the communication between the wireless communication assembly 11 and the remote control system 200 can be quickly repaired.

The intelligent harvester with automatic braking function may further include a delay detection control assembly 50. The delay detection control assembly 50 is operatively connected to the communication detection system 20. When the communication detection system 20 detects that the communication between the wireless communication assembly 11 and the remote control system 200 fails, the delay detection control assembly 50 can control the communication detection system 20 to re-detect the communication between the wireless communication assembly 11 and the remote control system 200 again after an interval of a preset time.

During the operation of the intelligent harvester with automatic braking function, the communication between the wireless communication assembly 11 and the remote control system 200 may have certain fluctuations. For example, if the signal strength between the wireless communication assembly 11 and the remote control system 200 suddenly weakens, but returns to normal in a short time, then in this case, if the braking system 30 controls the harvester body 10 to brake and the user waits for maintenance personnel to come and repair the intelligent harvester, it will take a lot of time and greatly reduces the operating efficiency of the intelligent harvester.

Preferably, when the communication detection system 20 detects that the communication between the wireless communication assembly 11 and the remote control system 200 fails, the braking system 30 controls the harvester body 10 to brake. After the braking system 30 controls the harvester body 10 to brake for a period of time, the delay detection control assembly 50 controls the communication detection system 20 to detect the communication between the wireless communication assembly 11 and the remote control system 200 again. When the communication between the wireless communication assembly 11 and the remote control system 200 detected again by the communication detection system 20 meets a preset condition, the braking system 30 controls the harvester body 10 to start the operation again. When the communication between the wireless communication assembly 11 and the remote control system 200 detected again by the communication detection system 20 is still faulty, the harvester body 10 is not restarted and waits to be repaired.

After the braking system 30 controls the harvester body 10 to brake, and before the harvester body 10 is controlled to start again, the delay detection control assembly 50 controls the communication detection system 20 to re-detect the communication between the wireless communication assembly 11 and the remote control system 200 for multiple times, so that the harvester body 10 is controlled to move again when the communication between the wireless communication assembly 11 and the remote control system 200 is completely normal. In other words, after the braking system 30 controls the harvester body 10 to brake, only when the communication detection system 20 detects the communication between the wireless communication assembly 11 and the remote control system 200 is normal multiple times, the braking system 30 controls the harvester body 10 to start again.

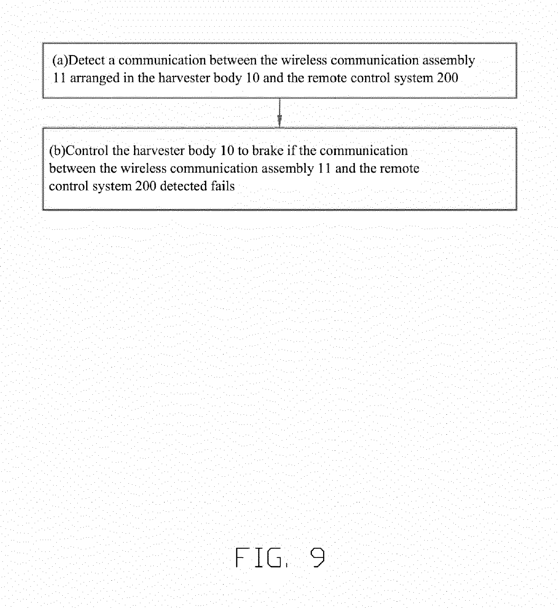

Referring to FIG. 9, a braking method for the intelligent harvester with automatic braking function is also provided according to an embodiment of the present disclosure, which is executed by the intelligent harvester with automatic braking function. The braking method includes following steps.

Step (a): the communication between the wireless communication assembly 11 arranged in the harvester body 10 and the remote control system 200 is detected.

Step (b): if the communication between the wireless communication assembly 11 and the remote control system 200 fails, the harvester body 10 is controlled to brake.

In at least one embodiment, the intelligent harvester with automatic braking function further includes the braking system 30 and the transmission assembly 12, when the communication between the wireless communication assembly 11 and the remote control system 200 fails, the braking system 30 controls the transmission assembly 12 arranged in the harvester body 10 to switch to the neutral position.

In at least one embodiment, the intelligent harvester with automatic braking function further includes the braking assembly 13, when the communication between the wireless communication assembly 11 and the remote control system 200 fails, the braking system 30 controls the braking assembly 13 arranged in the harvester body 10 to brake, so that the harvester body 10 brakes urgently without the control of the remote control system 200.

Specifically, the intelligent harvester with automatic braking function further includes the communication detection system 20. The communication detection system 20 is used to detect the communication between the wireless communication assembly 11 and the remote control system 200. In step (a), the communication detection system 20 detects the communication between the wireless communication assembly 11 and the remote control system 200.

The communication detection system 20 further includes the communication strength detection unit 22 and the signal comparison unit 23 operatively connected to the communication strength detection unit 22. The communication strength detection unit 22 is used to detect the signal strength between the wireless communication assembly 11 and the remote control system 200, and the signal comparison unit 23 is used to compare the signal strength detected by the communication strength detection unit 22 and the preset signal value. When the signal strength between the wireless communication assembly 11 and the remote control system 200 detected by the communication strength detection unit 22 is less than the preset signal value, the braking system 30 controls the harvester body 10 to brake.

The communication detection system 20 further includes the communication interruption detection assembly 24. The communication interruption detection assembly 24 is used to detect the communication between the wireless communication assembly 11 and the remote control system 200. When the communication interruption detection assembly 24 detects that the communication between the wireless communication assembly 11 and the remote control system 200 is interrupted, the braking system 30 controls the harvester body 10 to brake.

## Claims

1. An intelligent harvester with automatic braking function operatively connected to a remote control system, comprising:
a harvester body;
a wireless communication assembly arranged in the harvester body and operatively connected to the remote control system;
a communication detection system configured to detect a communication between the wireless communication assembly and the remote control system; and
a braking system arranged in the harvester body and operatively connected to the communication detection system, wherein the braking system is configured to control the harvester body to brake when the communication detection system detects failure of the communication between the wireless communication assembly and the remote control system; the communication detection system comprises a communication strength detection unit and a signal comparison unit operatively connected to the communication strength detection unit, **characterized in that**, when the communication detection system detects the communication between the wireless communication assembly and the remote control system, the communication strength detection unit is configured to detect a signal strength of the communication between the wireless communication assembly and the remote control system, the signal comparison unit is configured to compare the signal strength detected by the communication strength detection unit and a preset signal value, the signal comparison unit is operatively connected to the braking system, the braking system is configured to control the harvester body to brake when the signal strength detected by the communication strength detection unit is less than the preset signal value.

2. The intelligent harvester with automatic braking function of claim 1, further comprises a transmission assembly arranged in the harvester body and operatively connected to the braking system, the braking system is configured to control the transmission assembly to switch to a neutral position when the communication detection system detects failure of the communication between the wireless communication assembly and the remote control system.

3. The intelligent harvester with automatic braking function of claim 1 or 2, further comprises a braking assembly operatively connected to the braking system, the braking system configured to control the braking assembly to brake when the communication detection system detects failure of the communication between the wireless communication assembly and the remote control system.

4. The intelligent harvester with automatic braking function of claim 2, wherein the braking assembly comprises a controller and a first driving assembly operatively connected to the controller, the controller is operatively connected to the communication detection system, the first driving assembly is connected to the transmission assembly, the controller is configured to control an operation of the first driving assembly and the first driving assembly is configured to drive the transmission assembly to switch to the neutral position when the communication detection system detects failure of the communication between the wireless communication assembly and the remote control system.

5. The intelligent harvester with automatic braking function of claim 3, wherein the braking assembly comprises a controller and a second driving assembly operatively connected to the controller, the controller is operatively connected to the communication detection system, the second driving assembly is connected to the braking assembly, the controller is configured to control an operation of the second driving assembly and the second driving assembly is configured to drive the braking assembly to brake when the communication detection system detects failure of the communication between the wireless communication assembly and the remote control system.

6. The intelligent harvester with automatic braking function of claim 4, wherein the first driving assembly comprises a motor main body and a driving shaft extending outward from the motor main body, the transmission assembly comprises a transmission main body and a control rod extending outward from the transmission main body, the driving shaft is connected to the control rod and is configured to drive the control rod to make movement relative to the transmission main body.

7. The intelligent harvester with automatic braking function of claim 1 or 6, further comprises a positioning assembly configured to obtain a position of the harvester body.

8. The intelligent harvester with automatic braking function of claim 1, wherein the communication detection system comprises a communication interruption detection assembly, the communication interruption detection assembly configured to detect the communication between the wireless communication assembly and the remote control system.

9. The intelligent harvester with automatic braking function of claim 7, wherein the communication detection system comprises a communication interruption detection assembly, the communication interruption detection assembly configured to detect the communication between the wireless communication assembly and the remote control system.

10. The intelligent harvester with automatic braking function of claim 1, further comprises a delay detection control assembly operatively connected to the communication detection system, the delay detection control assembly configured to control the communication detection system to re-detect the communication between the wireless communication assembly and the remote control system after an interval of a preset time after the braking system controls the harvester body to brake.

11. The intelligent harvester with automatic braking function of claim 9, further comprises a delay detection control assembly operatively connected to the communication detection system, the delay detection control assembly configured to control the communication detection system to re-detect the communication between the wireless communication assembly and the remote control system after an interval of a preset time after the braking system controls the harvester body to brake.

12. A braking method for an intelligent harvester with automatic braking function, comprising:
(a) detecting a communication between a wireless communication assembly arranged in a harvester body and a remote control system; and
(b) controlling the harvester body to brake when the communication between the wireless communication assembly and the remote control system fails; **characterized in that**, controlling the harvester body to brake when the communication between the wireless communication assembly and the remote control system does not fail and a signal strength detected of the communication between the wireless communication assembly and the remote control system is less than a preset signal value.

13. The braking method of claim 12, wherein in the step (b), controlling a transmission assembly arranged in the harvester body to switch to a neutral position when the communication between the wireless communication assembly and the remote control system fails.

14. The braking method of claim 12, wherein in the step (b), controlling a braking assembly arranged in the harvester body to brake when the communication between the wireless communication assembly and the remote control system fails.

15. The braking method of claim 12, wherein after controlling the harvester body to brake, re-detecting the communication between the wireless communication assembly and the remote control system; when a signal strength re-detected between the wireless communication assembly and the remote control system is greater than a preset signal value, controlling the harvester body to restart.

## Patentansprüche

1. Eine intelligente Erntemaschine mit automatischer Bremsfunktion, die operativ mit einem Fernsteuerungssystem verbunden ist, umfassend:
ein Harvester-Aufbau;
eine drahtlose Kommunikationseinheit, die im Erntemaschinenkörper angeordnet und operativ mit dem Fernsteuerungssystem verbunden ist;
ein Kommunikationserkennungssystem, das zum Erkennen einer Kommunikation zwischen der drahtlosen Kommunikationsbaugruppe und dem Fernbedienungssystem konfiguriert ist; und
ein Bremssystem, das im Erntemaschinenkörper angeordnet und betriebsmäßig mit dem Kommunikationserkennungssystem verbunden ist, wobei das Bremssystem so konfiguriert ist, dass es den Erntemaschinenkörper so steuert, dass er bremst, wenn das Kommunikationserkennungssystem einen Ausfall der Kommunikation zwischen der drahtlosen Kommunikationsbaugruppe und dem Fernbedienungssystem erkennt; das Kommunikationserkennungssystem umfasst eine Kommunikationsstärkeerkennungseinheit und eine Signalvergleichseinheit, die betriebsmäßig mit der Kommunikationsstärkeerkennungseinheit verbunden ist, **dadurch gekennzeichnet, dass**, wenn das Kommunikationserkennungssystem die Kommunikation zwischen der drahtlosen Kommunikationsbaugruppe und dem Fernbedienungssystem erkennt, die Kommunikationsstärkeerkennungseinheit so konfiguriert ist, dass sie eine Signalstärke der Kommunikation zwischen der drahtlosen Kommunikationsbaugruppe und dem Fernbedienungssystem erkennt, die Signalvergleichseinheit so konfiguriert ist, dass sie die von der Kommunikationsstärkeerkennungseinheit erkannte Signalstärke mit einem voreingestellten Signalwert vergleicht, die Signalvergleichseinheit betriebsmäßig mit dem Bremssystem verbunden ist, das Bremssystem so konfiguriert ist, dass es den Erntemaschinenkörper so steuert, dass er bremst, wenn die von der Kommunikationsstärkeerkennungseinheit erkannte Signalstärke geringer ist als der voreingestellte Signalwert.

2. Die intelligente Erntemaschine mit automatischer Bremsfunktion nach Anspruch 1 umfasst außerdem eine Getriebebaugruppe, die im Erntemaschinenkörper angeordnet und betriebsmäßig mit dem Bremssystem verbunden ist, wobei das Bremssystem so konfiguriert ist, dass es die Getriebebaugruppe steuert, um in eine neutrale Position zu wechseln, wenn das Kommunikationserkennungssystem einen Ausfall der Kommunikation zwischen der drahtlosen Kommunikationsbaugruppe und dem Fernsteuerungssystem erkennt.

3. Die intelligente Erntemaschine mit automatischer Bremsfunktion nach Anspruch 1 oder 2 umfasst außerdem eine Bremsbaugruppe, die operativ mit dem Bremssystem verbunden ist, wobei das Bremssystem so konfiguriert ist, dass es die Bremsbaugruppe so steuert, dass sie bremst, wenn das Kommunikationserkennungssystem einen Fehler in der Kommunikation zwischen der drahtlosen Kommunikationsbaugruppe und dem Fernsteuerungssystem erkennt.

4. Intelligente Erntemaschine mit automatischer Bremsfunktion nach Anspruch 2, wobei die Bremsbaugruppe eine Steuerung und eine erste Antriebsbaugruppe umfasst, die operativ mit der Steuerung verbunden ist, die Steuerung operativ mit dem Kommunikationserkennungssystem verbunden ist, die erste Antriebsbaugruppe mit der Getriebebaugruppe verbunden ist, die Steuerung so konfiguriert ist, dass sie einen Betrieb der ersten Antriebsbaugruppe steuert, und die erste Antriebsbaugruppe so konfiguriert ist, dass sie die Getriebebaugruppe antreibt, um in die Neutralstellung zu wechseln, wenn das Kommunikationserkennungssystem einen Ausfall der Kommunikation zwischen der drahtlosen Kommunikationsbaugruppe und dem Fernsteuerungssystem erkennt.

5. Intelligente Erntemaschine mit automatischer Bremsfunktion nach Anspruch 3, wobei die Bremsbaugruppe einen Controller und eine zweite Antriebsbaugruppe umfasst, die operativ mit dem Controller verbunden ist, der Controller operativ mit dem Kommunikationserkennungssystem verbunden ist, die zweite Antriebsbaugruppe mit der Bremsbaugruppe verbunden ist, der Controller so konfiguriert ist, dass er einen Betrieb der zweiten Antriebsbaugruppe steuert, und die zweite Antriebsbaugruppe so konfiguriert ist, dass sie die Bremsbaugruppe zum Bremsen antreibt, wenn das Kommunikationserkennungssystem einen Ausfall der Kommunikation zwischen der drahtlosen Kommunikationsbaugruppe und dem Fernsteuerungssystem erkennt.

6. Die intelligente Erntemaschine mit automatischer Bremsfunktion nach Anspruch 4, wobei die erste Antriebsbaugruppe einen Motorhauptkörper und eine Antriebswelle umfasst, die sich vom Motorhauptkörper nach außen erstreckt, die Getriebebaugruppe einen Getriebehauptkörper und eine Steuerstange umfasst, die sich vom Getriebehauptkörper nach außen erstreckt, die Antriebswelle mit der Steuerstange verbunden ist und so konfiguriert ist, dass sie die Steuerstange antreibt, um eine Bewegung relativ zum Getriebehauptkörper auszuführen.

7. Die intelligente Erntemaschine mit automatischer Bremsfunktion nach Anspruch 1 oder 6 umfasst außerdem eine Positionierungsanordnung, die so konfiguriert ist, dass sie eine Position des Erntemaschinenkörpers erhält.

8. Die intelligente Erntemaschine mit automatischer Bremsfunktion nach Anspruch 1, wobei das Kommunikationserkennungssystem eine Kommunikationsunterbrechungserkennungsbaugruppe umfasst, wobei die Kommunikationsunterbrechungserkennungsbaugruppe so konfiguriert ist, dass sie die Kommunikation zwischen der drahtlosen Kommunikationsbaugruppe und dem Fernsteuerungssystem erkennt.

9. Die intelligente Erntemaschine mit automatischer Bremsfunktion nach Anspruch 7, wobei das Kommunikationserkennungssystem eine Kommunikationsunterbrechungserkennungsbaugruppe umfasst, wobei die Kommunikationsunterbrechungserkennungsbaugruppe so konfiguriert ist, dass sie die Kommunikation zwischen der drahtlosen Kommunikationsbaugruppe und dem Fernsteuerungssystem erkennt.

10. Die intelligente Erntemaschine mit automatischer Bremsfunktion nach Anspruch 1 umfasst außerdem eine Verzögerungserkennungssteuereinheit, die operativ mit dem Kommunikationserkennungssystem verbunden ist, wobei die Verzögerungserkennungssteuereinheit so konfiguriert ist, dass sie das Kommunikationserkennungssystem steuert, um die Kommunikation zwischen der drahtlosen Kommunikationseinheit und dem Fernsteuerungssystem nach einem Intervall einer voreingestellten Zeit erneut zu erkennen, nachdem das Bremssystem den Erntemaschinenkörper zum Bremsen steuert.

11. Die intelligente Erntemaschine mit automatischer Bremsfunktion nach Anspruch 9 umfasst außerdem eine Verzögerungserkennungssteuereinheit, die operativ mit dem Kommunikationserkennungssystem verbunden ist, wobei die Verzögerungserkennungssteuereinheit so konfiguriert ist, dass sie das Kommunikationserkennungssystem steuert, um die Kommunikation zwischen der drahtlosen Kommunikationseinheit und dem Fernsteuerungssystem nach einem Intervall einer voreingestellten Zeit erneut zu erkennen, nachdem das Bremssystem den Erntemaschinenkörper zum Bremsen steuert.

12. Bremsverfahren für eine intelligente Erntemaschine mit automatischer Bremsfunktion, umfassend:
(a) (a) Erkennen einer Kommunikation zwischen einer in einem Erntemaschinenkörper angeordneten drahtlosen Kommunikationsbaugruppe und einem Femsteuerungssystem; und
(b) Steuern des Erntemaschinenkörpers zum Bremsen, wenn die Kommunikation zwischen der drahtlosen Kommunikationsbaugruppe und dem Fernbedienungssystem ausfällt; **dadurch gekennzeichnet, dass** das Steuern des Erntemaschinenkörpers zum Bremsen, wenn die Kommunikation zwischen der drahtlosen Kommunikationsbaugruppe und dem Fernbedienungssystem nicht ausfällt und eine erkannte Signalstärke der Kommunikation zwischen der drahtlosen Kommunikationsbaugruppe und dem Fernbedienungssystem geringer als ein voreingestellter Signalwert ist.

13. Bremsverfahren nach Anspruch 12, wobei in Schritt (b) eine im Erntemaschinenkörper angeordnete Getriebeanordnung gesteuert wird, um in eine Neutralstellung zu wechseln, wenn die Kommunikation zwischen der drahtlosen Kommunikationsanordnung und dem Fernsteuerungssystem ausfällt.

14. Bremsverfahren nach Anspruch 12, wobei in Schritt (b) eine im Erntemaschinenkörper angeordnete Bremsanordnung so gesteuert wird, dass sie bremst, wenn die Kommunikation zwischen der drahtlosen Kommunikationsanordnung und dem Fernsteuerungssystem ausfällt.

15. Bremsverfahren nach Anspruch 12, wobei nach dem Steuern des Erntemaschinenkörpers zum Bremsen die Kommunikation zwischen der drahtlosen Kommunikationsbaugruppe und dem Fernsteuerungssystem erneut erkannt wird; wenn eine erneut erkannte Signalstärke zwischen der drahtlosen Kommunikationsbaugruppe und dem Fernsteuerungssystem größer als ein voreingestellter Signalwert ist, der Erntemaschinenkörper zum Neustart gesteuert wird.

## Revendications

1. Une moissonneuse intelligente dotée d'une fonction de freinage automatique et connectée à un système de commande à distance, comprenant :
un corps de moissonneuse ;
un dispositif de communication sans fil disposé dans le corps de la moissonneuse et connecté de manière opérationnelle au système de commande à distance ;
un système de détection de communication configuré pour détecter une communication entre le dispositif de communication sans fil et le système de commande à distance ; et
un système de freinage disposé dans le corps de la moissonneuse et connecté de manière opérationnelle au système de détection de la communication, dans lequel le système de freinage est configuré pour commander le freinage du corps de la moissonneuse lorsque le système de détection de la communication détecte une défaillance de la communication entre le dispositif de communication sans fil et le système de commande à distance ; le système de détection de la communication comprend une unité de détection de l'intensité de la communication et une unité de comparaison des signaux reliée de manière opérationnelle à l'unité de détection de l'intensité de la communication, **caractérisée par le fait que**, lorsque le système de détection de la communication détecte la communication entre le dispositif de communication sans fil et le système de commande à distance, l'unité de détection de l'intensité de la communication est configurée pour détecter l'intensité du signal de la communication entre le dispositif de communication sans fil et le système de commande à distance, l'unité de comparaison du signal est configurée pour comparer l'intensité du signal détectée par l'unité de détection de l'intensité de la communication et une valeur de signal prédéfinie, l'unité de comparaison du signal est connectée de manière opérationnelle au système de freinage, le système de freinage étant configuré pour commander le freinage de la moissonneuse lorsque l'intensité du signal détecté par l'unité de détection de l'intensité de la communication est inférieure à la valeur de signal prédéfinie.

2. La moissonneuse intelligente avec fonction de freinage automatique de la revendication 1 comprend en outre un dispositif de transmission disposé dans le corps de la moissonneuse et connecté de manière opérationnelle au système de freinage, le système de freinage étant configuré pour commander le dispositif de transmission afin qu'il passe en position neutre lorsque le système de détection de la communication détecte une défaillance de la communication entre le dispositif de communication sans fil et le système de commande à distance.

3. La moissonneuse intelligente avec fonction de freinage automatique de la revendication 1 ou 2 comprend en outre un dispositif de freinage connecté de manière opérationnelle au système de freinage, le système de freinage étant configuré pour commander le freinage du dispositif de freinage lorsque le système de détection de la communication détecte une défaillance de la communication entre le dispositif de communication sans fil et le système de commande à distance.

4. La moissonneuse intelligente avec fonction de freinage automatique de la revendication 2, dans laquelle le dispositif de freinage comprend un contrôleur et un premier dispositif de conduite connecté de manière opérationnelle au contrôleur, le contrôleur est connecté de manière opérationnelle au système de détection de la communication, le premier dispositif de conduite est connecté au dispositif de transmission, le contrôleur est configuré pour commander un fonctionnement du premier dispositif de conduite et le premier dispositif de conduite est configuré pour entraîner le dispositif de transmission afin qu'il passe en position neutre lorsque le système de détection de la communication détecte une défaillance de la communication entre le dispositif de communication sans fil et le système de commande à distance.

5. La moissonneuse intelligente avec fonction de freinage automatique de la revendication 3, dans laquelle le dispositif de freinage comprend un contrôleur et un second dispositif de conduite connecté de manière opérationnelle au contrôleur, le contrôleur est connecté de manière opérationnelle au système de détection de la communication, le premier dispositif de conduite est connecté au dispositif de transmission, le contrôleur est configuré pour commander un fonctionnement du premier dispositif de conduite et le second dispositif de conduite est configuré pour entraîner le dispositif de transmission afin qu'il passe en position neutre lorsque le système de détection de la communication détecte une défaillance de la communication entre le dispositif de communication sans fil et le système de commande à distance.

6. La moissonneuse intelligente avec fonction de freinage automatique de la revendication 4, dans laquelle le premier dispositif de conduite comprend un corps principal de moteur et un arbre d'entraînement s'étendant vers l'extérieur du corps principal de moteur, le dispositif de transmission comprend un corps principal de transmission et une tige de commande s'étendant vers l'extérieur du dispositif principal de transmission, l'arbre d'entraînement est connecté à la tige de commande et est configuré pour entraîner la tige de commande pour effectuer un mouvement par rapport au corps principal de transmission.

7. La moissonneuse intelligente avec fonction de freinage automatique de la revendication 1 ou 6 comprend en outre un dispositif de positionnement configuré pour obtenir une position du corps de la moissonneuse.

8. La moissonneuse intelligente avec fonction de freinage automatique de la revendication 1, dans laquelle le système de détection de la communication comprend un dispositif de détection d'interruption de la communication, le dispositif de détection d'interruption de la communication étant configuré pour détecter la communication entre le dispositif de communication sans fil et le système de commande à distance.

9. La moissonneuse intelligente avec fonction de freinage automatique de la revendication 7, dans laquelle le système de détection de la communication comprend un dispositif de détection d'interruption de la communication, le dispositif de détection d'interruption de la communication étant configuré pour détecter la communication entre le dispositif de communication sans fil et le système de commande à distance.

10. La moissonneuse intelligente avec fonction de freinage automatique de la revendication 1 comprend en outre un dispositif de contrôle de détection de retard connecté de manière opérationnelle au système de détection de communication, le dispositif de contrôle de détection de retard étant configuré pour contrôler le système de détection de communication afin de re-détecter la communication entre le dispositif de communication sans fil et le système de commande à distance après un intervalle de temps prédéfini après que le système de freinage a commandé le freinage du corps de la moissonneuse.

11. La moissonneuse intelligente avec fonction de freinage automatique de la revendication 9 comprend en outre un dispositif de contrôle de détection de retard connecté de manière opérationnelle au système de détection de communication, le dispositif de contrôle de détection de retard étant configuré pour contrôler le système de détection de communication afin de re-détecter la communication entre le dispositif de communication sans fil et le système de commande à distance après un intervalle de temps prédéfini après que le système de freinage a commandé le freinage du corps de la moissonneuse.

12. Méthode de freinage pour une moissonneuse intelligente dotée d'une fonction de freinage automatique qui comprend :
(a) la détection d'une communication entre un dispositif de communication sans fil disposé dans un corps de moissonneuse et un système de commande à distance ; et
(b) la commande du freinage du corps de la moissonneuse lorsque la communication entre le dispositif de communication sans fil et le système de commande à distance échoue ; **caractérisé par le fait que**, commander le freinage du corps de la moissonneuse lorsque la communication entre le dispositif de communication sans fil et le système de commande à distance n'échoue pas et qu'une force de signal détectée de la communication entre le dispositif de communication sans fil et le système de commande à distance est inférieure à une valeur de signal préétablie.

13. La méthode de freinage de la revendication 12, dans laquelle l'étape (b) consiste à commander un dispositif de transmission disposé dans le corps de la moissonneuse pour qu'il passe en position neutre lorsque la communication entre le dispositif de communication sans fil et le système de commande à distance est interrompue.

14. La méthode de freinage de la revendication 12, dans laquelle l'étape (b) consiste à commander un dispositif de freinage disposé dans le corps de la moissonneuse pour qu'il freine lorsque la communication entre le dispositif de communication sans fil et le système de commande à distance est interrompue.

15. La méthode de freinage de la revendication 12, dans laquelle, après avoir commandé le freinage du corps de la moissonneuse, la communication entre le dispositif de communication sans fil et le système de commande à distance est redétectée ; lorsque l'intensité du signal redétecté entre le dispositif de communication sans fil et le système de commande à distance est supérieure à une valeur de signal prédéfinie, la commande du redémarrage du corps de la moissonneuse est activée.
